# EUROPÄISCHE PATENTSCHRIFT

(11) **EP 4 525 104 B1**
(45) Veröffentlichungstag und Bekanntmachung des Hinweises auf die Patenterteilung: **10.12.2025**
(21) Anmeldenummer: 24199894.7
(22) Anmeldetag: 12.09.2024
(51) Int. Cl.: H01M 8/04007, H01M 8/04225, H01M 8/04302, H01M 8/04701, H01M 8/04746, F25B 23/00

(54) **VERFAHREN ZUR REDUKTION VON TEMPERATURSPITZEN IN EINER BRENNSTOFFZELLE MIT ZWEIPHASEN-KÜHLSYSTEM**
METHOD FOR REDUCING TEMPERATURE PEAKS IN A FUEL CELL WITH A TWO PHASE COOLING SYSTEM
PROCÉDÉ DE RÉDUCTION DES PICS DE TEMPÉRATURE DANS UNE PILE À COMBUSTIBLE AYANT UN SYSTÈME DE REFROIDISSEMENT À DEUX PHASES

(30) Priorität: 13.09.2023 DE 102023124655
(43) Veröffentlichungstag der Anmeldung: 19.03.2025
(73) Patentinhaber: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(56) Entgegenhaltungen:
- EP-A1- 2 631 567
- DE-A1- 102020 212 939
- US-A1- 2022 238 896

## Beschreibung

### Gebiet der Erfindung

Die vorliegende Beschreibung betrifft allgemein das technische Gebiet der Luftfahrt. Insbesondere betrifft die Beschreibung ein Verfahren zur Reduktion von Temperaturspitzen in einer Brennstoffzelle sowie ein zugehöriges System und ein Luftfahrzeug aufweisend ein solches System.

### Hintergrund der Erfindung

Brennstoffzellen stellen eine mögliche Lösung für den emissionsfreien Antrieb oder die emissionsfreie Bordstromversorgung (APU = Auxiliary Power Unit) von beispielsweise Flugzeugen dar. Polymer-Elektrolyt-Brennstoffzellen (PEMFC) erzeugen Strom und Elektrizität durch die elektrochemische Reaktion von Wasserstoff und Sauerstoff zu Wasser. Bei dieser Reaktion entsteht Wärme, die abgeführt werden muss. In kommerziellen Brennstoffzellen-Stacks erfolgt dies in der Regel durch eine Flüssigkeitskühlung. Eine mögliche Alternative, die ein erhebliches Gewichtseinsparungspotenzial auf der Antriebssystemebene oder Bordstromversorgungssystemebene bietet, besteht darin, die Flüssigkeitskühlung durch einen Zwei-Phasen-Kühlkreislauf zu ersetzen. Dabei wird die latente Verdampfungswärme genutzt, um große Wärmemengen von den Brennstoffzellen abzuführen. Zusätzlich verbessert der hohe Wärmeübertragungskoeffizient im Vergleich zur einphasigen Kühlung die Leistung des Kühlsystems. Der Zwei-Phasen-Kühlkreislauf basiert dabei auf den Phasenübergängen in den Brennstoffzellen (Verdampfer) sowie im Wärmetauscher zur Umgebung (Kondensator).

Während des Zwei-Phasen-Kühlens, insbesondere während der hierfür notwendigen Siedekernbildung, treten Temperaturspitzen auf, die als "Liquid-Super-Heating" oder auch als Siedeverzug bezeichnet werden. Dieser Effekt führt zu höheren Temperaturen an der Grenzfläche, da der Siedeprozess noch nicht vollständig eingeleitet ist. Sobald eine bestimmte Überhitzung über dem Sättigungspunkt erreicht ist, beginnt das Sieden und die Temperatur sinkt auf die Sättigungstemperatur ab. Es handelt sich um einen vorübergehenden Effekt, der den Siedeprozess einleitet. Dieser Effekt des Siedeverzugs kann zu einer höheren Degradationsrate der

Brennstoffzelle aufgrund der erreichten Temperaturspitze führen.

US 2022/238896 A1, DE 102020212939 A1 und EP 2631567 A1 beschreiben Verfahren zum Starten eines BZ-Systems mit einem Zwei-Phasen Kühlsystem.

### Zusammenfassung der Erfindung

Es kann als Aufgabe der Erfindung betrachtet werden, ein Verfahren zur Optimierung des Betriebs und der Erhöhung der Haltbarkeit von Brennstoffzellen bereitzustellen. Diese Aufgabe wird gelöst durch die Gegenstände der unabhängigen Ansprüche. Weitere Ausführungsformen ergeben sich aus den abhängigen Ansprüchen sowie aus der folgenden Beschreibung.

Gemäß einem Aspekt weist ein Verfahren zur Reduktion von Temperaturspitzen während des Startens einer Brennstoffzelle mit einem Zwei-Phasen-Kühlsystem, die folgenden Schritte auf:
Einstellen eines Sättigungsdrucks eines Kühlmittels, über ein Druckregelungsmodul, auf einen ersten Sättigungsdruck, derart, dass eine durch Siedeverzug induzierte Höchsttemperatur eines Kühlmittels unterhalb einer maximalen Betriebstemperatur der Brennstoffzelle liegt;
Starten der Brennstoffzelle;
in Reaktion darauf, dass die durch Siedeverzug induzierte Höchsttemperatur des Kühlmittels überschritten ist, Einstellen des Sättigungsdrucks des Kühlmittels, über das Druckregelungsmodul, auf einen zweiten Sättigungsdruck, wobei der zweite Sättigungsdruck höher als der erste Sättigungsdruck ist.

Bei Zwei-Phasen-Strömungen ist die Sättigungstemperatur abhängig vom Druck. Die vorgeschlagene Betriebsstrategie besteht somit darin, die Höchsttemperatur des Siedeverzugs während der Startphase unterhalb einer Temperaturgrenze der Zellkomponenten festzulegen, indem der Sättigungsdruck im Kühlsystem gesenkt wird. Sobald der Spitzenwert überschritten ist und der Siedeprozess eingeleitet wird, kann der Sollwert des Druckreglers auf den nominellen Betriebsdruck/-temperatur erhöht werden.

Ein Vorteil dieses Verfahrens zur Reduzierung von Temperaturspitzen während des Startens einer Brennstoffzelle mit einem Zwei-Phasen-Kühlsystem liegt darin, dass es eine effektive Kontrolle und Regulierung des Sättigungsdrucks und damit der Temperatur des Kühlmittels ermöglicht.

Durch das Einstellen des Sättigungsdrucks des Kühlmittels auf einen ersten Sättigungsdruck, der unterhalb der maximalen Betriebstemperatur der Brennstoffzelle liegt, wird sichergestellt, den unerwünschten Effekt des Siedeverzugs bei zu hohen Temperaturen und damit eine Überhitzung über die eingestellte Siedetemperatur zu vermeiden. Dies reduziert das Risiko von Temperaturspitzen, die während des Startvorgangs auftreten können.

Nach dem Start der Brennstoffzelle überwacht das Verfahren kontinuierlich die Temperatur des Kühlmittels. Wenn die durch Siedeverzug induzierte Höchsttemperatur überschritten wird, wird der Sättigungsdruck des Kühlmittels angepasst, indem das Druckregelungsmodul verwendet wird. Der Sättigungsdruck wird auf einen zweiten, höheren Sättigungsdruck eingestellt. Dadurch wird eine erhöhte Wärmeabfuhr durch das Kühlmittel ermöglicht, was zu einer verbesserten Kühlleistung führt und die Temperatur der Brennstoffzelle effektiv kontrolliert.

Der Vorteil dieses Ansatzes liegt in der Fähigkeit, Temperaturspitzen während des Startvorgangs zu verhindern oder zu reduzieren. Durch die rechtzeitige Anpassung des Sättigungsdrucks kann eine optimale Kühlleistung sichergestellt werden, ohne dass es zu einer Überhitzung durch Siedeverzug über die anvisierte Betriebstemperatur kommt. Dies trägt zur Stabilität und Langlebigkeit der Brennstoffzelle bei und ermöglicht einen reibungslosen Betrieb des Systems.

Zusammenfassend ermöglicht das beschriebene Verfahren die präzise Steuerung des Sättigungsdrucks des Kühlmittels, um Temperaturspitzen während des Startvorgangs einer Brennstoffzelle zu minimieren. Dies führt zu einer verbesserten Zuverlässigkeit, Leistung und Lebensdauer der Brennstoffzelle sowie zu einer insgesamt optimierten Betriebseffizienz des Brennstoffzellensystems.

Gemäß einer Ausführungsform ist das Druckregelungsmodul ein Akkumulator.

Der Einsatz eines Akkumulators als Druckregelungsmodul bietet mehrere Vorteile. Er ermöglicht eine schnelle und präzise Anpassung des Sättigungsdrucks, um auf Veränderungen der Betriebsbedingungen und -anforderungen zu reagieren. Dadurch wird eine effiziente Kühlung und optimale Leistung der Brennstoffzelle gewährleistet.

Zusätzlich trägt der Akkumulator zur Stabilisierung des Drucks im Zwei-Phasen-Kühlsystem bei. Durch die Pufferung von Druckschwankungen und die Aufrechterhaltung eines konstanten Druckniveaus wird eine gleichmäßige Kühlmittelzufuhr gewährleistet, was zu einer verbesserten Wärmeübertragung und Kühlung führt.

Der Akkumulator bietet auch eine gewisse Redundanz und Sicherheit. Er kann als Reservoir für zusätzliches Kühlmittel dienen und unvorhergesehene Schwankungen im Systemdruck ausgleichen. Dadurch werden potenzielle Schäden an der Brennstoffzelle aufgrund von Druckspitzen oder -abfällen minimiert.

Gemäß einer Ausführungsform ist der Akkumulator mit einem Auslass der Brennstoffzelle verbunden und dazu eingerichtet, eine Dampf- und Flüssigphase des Kühlmittels voneinander zu trennen. Die Trennung von Dampf und Flüssigphase ist wesentlich bei einer Zwei-Phasenkühlung.

Gemäß einer Ausführungsform ist der Akkumulator eingerichtet, eine Temperatur des Kühlmittels einzustellen.

Der Einsatz eines Akkumulators als Druckregelungsmodul mit einstellbarer Temperatur bietet mehrere Vorteile. Durch die Möglichkeit, die Temperatur des Akkumulators anzupassen, kann der Sättigungsdruck des Kühlmittels präzise gesteuert werden. Dies ermöglicht eine effektive Kühlung der Brennstoffzelle und eine Vermeidung von Temperaturspitzen während des Betriebs.

Gemäß einer Ausführungsform ist der Akkumulator eingerichtet, einen Druck des Kühlmittels einzustellen.

Ebenso bietet der Einsatz eines Akkumulators als Druckregelungsmodul mit einstellbarem Druck verschiedene Vorteile. Durch die Möglichkeit, den Druck im Akkumulator anzupassen, kann der Sättigungsdruck und damit die Temperatur des Kühlmittels präzise gesteuert werden, um den Anforderungen der Brennstoffzelle gerecht zu werden. Dies ermöglicht eine effiziente Kühlung. Ein weiterer Vorteil eines druckgesteuertem Akkumulators ist die Möglichkeit der sofortigen Einstellung eines Verdampfungsdruckes.

Die einstellbare Druck- oder Temperaturfunktion des Akkumulators bietet auch Flexibilität bei der Anpassung des Kühlsystems an verschiedene Betriebsbedingungen und Anforderungen. Je nach den spezifischen Erfordernissen kann der Druck entsprechend eingestellt werden, um eine optimale Kühlung und Leistung der Brennstoffzelle sicherzustellen.

Insgesamt ermöglicht der Einsatz eines Akkumulators als Druckregelungsmodul mit einstellbarer Temperatur oder einstellbarem Druck eine präzise Steuerung des Sättigungsdrucks im Zwei-Phasen-Kühlsystem. Dies trägt zur Verbesserung der Leistung, Effizienz und Zuverlässigkeit des Brennstoffzellensystems bei und unterstützt einen stabilen und sicheren Betrieb.

Gemäß einer Ausführungsform ist das Druckregelungsmodul eine Kombination aus einer Pumpe und einem Drosselventil.

Der Einsatz einer Kombination aus einer Pumpe und einem Drosselventil als Druckregelungsmodul bietet verschiedene Vorteile. Die Pumpe ermöglicht eine aktive Kontrolle des Kühlmitteldrucks, indem sie das Kühlmittel mit einer bestimmten Geschwindigkeit und Druck in das System einspeist. Dadurch kann der Sättigungsdruck des Kühlmittels präzise gesteuert werden, um die optimale Betriebstemperatur der Brennstoffzelle aufrechtzuerhalten.

Gleichzeitig bietet eine Kombination aus einer Pumpe und einem Drosselventil die Möglichkeit von Einsparungen bei Gewicht und Bauraumbedarf des Kühlsystems durch die Reduzierung der benötigten Akkumulatorgröße oder den vollständigen Wegfall des Akkumulators.

Das Drosselventil dient als Regelventil, um den Durchfluss des Kühlmittels zu begrenzen und den Druck zu regulieren. Durch die Einstellung des Drosselventils kann der Druck im System kontrolliert und angepasst werden. Dies ermöglicht die präzise Steuerung des Sättigungsdrucks im Kühlsystem, um den Anforderungen der Brennstoffzelle gerecht zu werden und Temperaturspitzen zu vermeiden.

Darüber hinaus ermöglicht die Verwendung einer Kombination aus Pumpe und Drosselventil eine kontinuierliche Überwachung und Regelung des Kühlmitteldrucks. Das System kann auf Änderungen in den Betriebsbedingungen reagieren und den Druck entsprechend anpassen, um eine stabile Kühlung und einen sicheren Betrieb der Brennstoffzelle zu gewährleisten.

Gemäß einer Ausführungsform liegt der erste Sättigungsdruck in einem Bereich von 0 bar bis 10 bar, vorzugsweise 0 bar bis 5 bar, besonders bevorzugt 1,25 bar.

Gemäß einer Ausführungsform liegt der zweite Sättigungsdruck in einem Bereich von 0 bar bis 10 bar, vorzugsweise 0 bar bis 5 bar, besonders bevorzugt 3 bar.

Gemäß einer Ausführungsform beträgt die durch Siedeverzug induzierte Höchsttemperatur des Kühlmittels 50 % bis 100 % der Betriebstemperatur, vorzugsweise 60 % bis 90 %, besonders bevorzugt 70 % bis 80 %.

Gemäß einer Ausführungsform des Brennstoffzellensystems wird als Kühlmittel Methanol und/oder Ethanol verwendet. Diese Wahl des Kühlmittels bietet mehrere Vorteile für das System.

Methanol und Ethanol weisen eine hohe Wärmeleitfähigkeit auf, was bedeutet, dass sie Wärme effizient von den Brennstoffzellen und der Bipolarplatte abführen können.

Dadurch wird eine effektive Kühlung der Komponenten ermöglicht und die Betriebstemperatur der Brennstoffzelle auf einem optimalen Niveau gehalten.

Ferner haben Methanol und Ethanol niedrige Siedepunkte. Dies ist vorteilhaft, da sie schnell verdampfen können, wenn sie durch die Kühlmittelkanäle fließen. Durch die Verdampfung wird Wärme von den Komponenten absorbiert, was zu einer effektiven Kühlung führt. Insbesondere die zum Betrieb der Brennstoffzelle passende Kombination von Siedetemperatur und Sättigungsdruck stellt sich dabei als vorteilhaft dar.

Ferner weisen Methanol und Ethanol eine hohe Verdampfungsenthalpie auf. Dadurch können sehr kleine Massenströme im System realisiert werden, wodurch Druckverlust reduziert wird. Dadurch können Leitungen und Pumpen kleiner dimensioniert werden als mit der Flüssigkeitskühlung, was zu einer Einsparung des Gewichts des Systems führt.

Gemäß einem Aspekt weist ein System zum Betreiben einer Brennstoffzelle mit einem Zwei-Phasen-Kühlsystem, wobei das System zur Reduktion von Temperaturspitzen während des Startens eingerichtet ist ein Verfahren auszuführen, Folgendes auf. Mindestens eine Brennstoffzelle, ein Druckregelungsmodul, einen Wärmetauscher und einen Kühlmittelkreislauf. Der Kühlmittelkreislauf ist dabei eingerichtet, die Brennstoffzelle durch den Phasenübergang des Kühlmittels zu kühlen. Das Druckregelungsmodul ist eingerichtet, einen Sättigungsdruck eines in dem Kühlmittelkreislauf enthaltenen Kühlmittels einzustellen.

Das System umfasst dabei mindestens eine Brennstoffzelle oder einen Brennstoffzellenstapel, die für die Energieerzeugung aus dem eingespeisten Brennstoff verantwortlich ist. Um die Brennstoffzelle effektiv zu kühlen, wird ein Zwei-Phasen-Kühlsystem verwendet. Dieses Kühlsystem ermöglicht eine effiziente Wärmeabfuhr und trägt zur Stabilisierung der Betriebstemperatur bei.

Ein wesentlicher Bestandteil des Systems ist das Druckregelungsmodul, das für die Steuerung des Sättigungsdrucks des in den Kühlmittelkreislauf eingespeisten Kühlmittels verantwortlich ist. Der Sättigungsdruck wird so eingestellt, dass die Höchsttemperatur des Kühlmittels während des Startvorgangs unterhalb der maximalen Betriebstemperatur der Brennstoffzelle bleibt. Dadurch werden unerwünschte Temperaturspitzen vermieden und eine optimale Kühlleistung gewährleistet.

Der Kühlmittelkreislauf ist speziell konstruiert, um eine effiziente Verteilung und Zirkulation des Kühlmittels zu ermöglichen. Das Kühlmittel wird durch die Brennstoffzelle und das Zwei-Phasen-Kühlsystem gepumpt, um die entstehende Wärme abzuführen und eine gleichmäßige Kühlung zu gewährleisten.

Durch die Kombination dieser Komponenten und das präzise Einstellen des Sättigungsdrucks des Kühlmittels während des Startvorgangs kann das beschriebene System die Temperatur der Brennstoffzelle effektiv regulieren und somit ihre Lebensdauer und Leistung verbessern. Die Reduktion von Temperaturspitzen trägt somit dazu bei, thermische Belastungen zu minimieren und eine zuverlässige und stabile Betriebsumgebung für die Brennstoffzelle zu schaffen.

Insgesamt ermöglicht das beschriebene System eine effiziente Kühlung der Brennstoffzelle mit einem Zwei-Phasen-Kühlsystem und trägt dazu bei, die Leistung und Lebensdauer der Brennstoffzelle zu optimieren. Dies ist von entscheidender Bedeutung für den zuverlässigen Betrieb des Brennstoffzellensystems und seine Anwendung in verschiedenen Bereichen wie Transport, Energiespeicherung und vielen anderen Anwendungen.

Gemäß einem Aspekt umfasst ein Luftfahrzeug ein genanntes System. Das System kann dabei ausdrücklich auch in anderen Systemen Anwendung finden, wie Kraftfahrzeuge, Wasserfahrzeuge, Raumfahrt, oder sonstige mit einer Brennstoffzelle angetriebenen Einheiten.

Durch die Integration dieses Systems in das Luftfahrzeug wird eine nachhaltige und umweltfreundliche Energiequelle für den Antrieb oder die Bordstromversorgung des Luftfahrzeugs bereitgestellt. Die Brennstoffzelle ermöglicht eine hohe Energieeffizienz und reduziert gleichzeitig die Emissionen im Vergleich zu herkömmlichen Verbrennungsmotoren. Das Zwei-Phasen-Kühlsystem gewährleistet eine effiziente Kühlung und trägt zur Zuverlässigkeit und Langlebigkeit des Brennstoffzellensystems bei.

Durch die Verwendung dieses Systems im Luftfahrzeug kann eine längere Flugdauer und eine verbesserte Leistung erreicht werden. Zudem reduziert es den Umwelteinfluss und bietet eine nachhaltige Alternative zu herkömmlichen Kraftstoffquellen. Das Luftfahrzeug mit dem integrierten Brennstoffzellensystem trägt somit zu einer saubereren und umweltfreundlicheren Luftfahrt bei.

Gemäß einer Ausführungsform kann das Verfahren ferner um folgende Verfahrensschritte zum Starten einer Brennstoffzelle bei Temperaturen unter 0° Celsius ergänzt werden, da bei diesen Temperaturen das Vermeiden von Temperaturspitzen für das kalte Material besonders relevant sind:
Starten der Brennstoffzelle,
Aktivieren der Pumpe nach einem definierten Zeitraum, wobei während des definierten Zeitraums das Kühlmittel im Wesentlichen in der Gasphase innerhalb der Brennstoffzelle vorliegt.

Temperaturen unter dem Gefrierpunkt führen zu Eisbildung in den Gaskanälen. Aus diesem Grund wird die Zeit, um Temperaturen über 0 °C zu erreichen, als entscheidender Faktor angesehen, und eine Reduzierung der zu erwärmenden thermischen Masse als vorteilhaft betrachtet. Um diesen Prozess im Vergleich zur Flüssigkeitskühlung zu beschleunigen, wird die technische Lösung vorgeschlagen, den Zwei-Phasen-Zustand des Kühlmittels in der Brennstoffzelle zu nutzen und die Kühlmittelpumpe präzise zu steuern.

Die beschriebenen zusätzliche Verfahrensschritte zum Starten einer Brennstoffzelle bei Temperaturen unter 0°C mit einem Zwei-Phasen-Kühlsystem bietet somit eine effektive Methode, um die Brennstoffzelle in kalten Umgebungen zu aktivieren und zu betreiben. Das Zwei-Phasen-Kühlsystem verwendet eine spezielle Pumpe, um das Kühlmittel zu fördern, wobei das Kühlmittel zumindest teilweise in einer Gasphase vorliegt.

Der Startvorgang beginnt mit dem Starten der Brennstoffzelle gemäß den üblichen Verfahren. Nach einem definierten Zeitraum, der für die notwendige Aktivierung der Brennstoffzelle erforderlich ist, wird die Pumpe aktiviert. Während dieses definierten Zeitraums liegt das Kühlmittel im Wesentlichen in der Gasphase innerhalb der Brennstoffzelle vor.

Durch diese Vorgehensweise werden mehrere Vorteile erzielt. Erstens ermöglicht die Verwendung eines Zwei-Phasen-Kühlsystems eine effiziente Wärmeabfuhr und gewährleistet eine optimale Kühlung der Brennstoffzelle, selbst bei niedrigen Temperaturen. Zweitens ermöglicht die Aktivierung der Pumpe nach einem definierten Zeitraum eine verkürzte Anlaufzeit für die Brennstoffzelle mit geringer thermischer Masse, bevor das Kühlmittel unterkühlt eintritt um die Startzeit bzw. Aufwärmzeit zu verkürzen. Liegt das Kühlmittel in der Gasphase vor, so weist das Kühlmittel eine gegenüber der Flüssigphase geringer Dichte auf. Diese geringere Dichte resultiert in eine geringere thermische Masse, was zu einer schnelleren Aufheizung bei gleicher Wärmezufuhr führt.

Die Anwendung dieses Verfahrens bietet daher eine zuverlässige Möglichkeit, eine Brennstoffzelle auch bei kalten Temperaturen erfolgreich zu starten und zu betreiben. Es ermöglicht eine effiziente Kühlung und trägt zur langfristigen Stabilität und Leistungsfähigkeit der Brennstoffzelle bei niedrigen Temperaturen bei. Durch die Gewährleistung eines optimalen Betriebs der Brennstoffzelle in kalten Umgebungen wird die Einsatzfähigkeit und Zuverlässigkeit des Systems verbessert.

Ein derartiges Verfahren zur Reduktion von Temperaturspitzen während des Startens und zusätzlich zum Starten einer Brennstoffzelle bei Temperaturen unter 0°C ist insbesondere mit einem beschriebenen System zum Betreiben einer Brennstoffzelle mit einem Zwei-Phasen-Kühlsystem ausführbar.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: ein Flussdiagramm eines Verfahrens zur Reduktion von Temperaturspitzen während des Startens einer Brennstoffzelle mit einem Zwei-Phasen-Kühlsystem;
- **Fig. 2A**: ein System zum Betreiben einer Brennstoffzelle mit einem Zwei-Phasen-Kühlsystem nach einer ersten Ausführungsform;
- **Fig. 2B**: ein System zum Betreiben einer Brennstoffzelle mit einem Zwei-Phasen-Kühlsystem nach einer zweiten Ausführungsform;
- **Fig. 3**: ein Luftfahrzeug mit einem System zum Betreiben einer Brennstoffzelle mit einem Zwei-Phasen-Kühlsystem; und
- **Fig. 4**: zwei graphische Darstellungen von Temperaturverläufen über die Zeit.

### Detaillierte Beschreibung von Ausführungsbeispielen

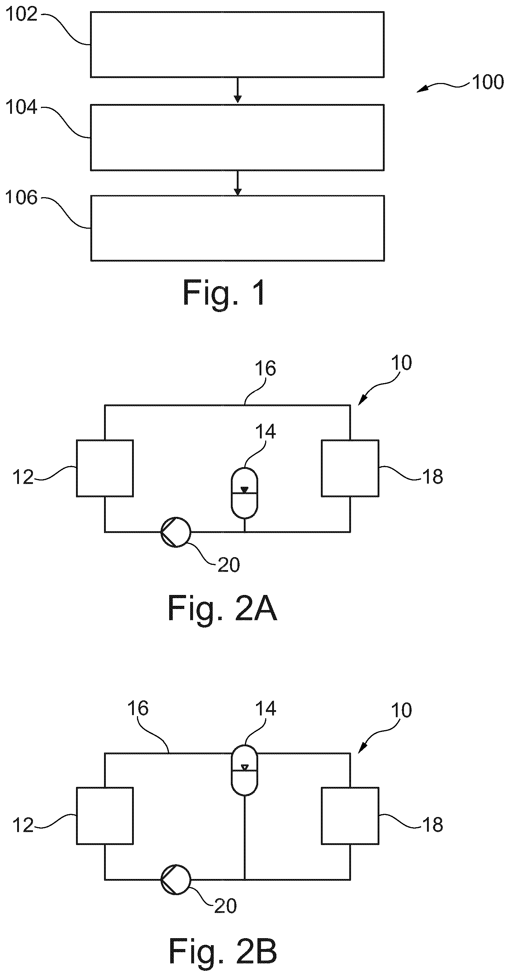

Fig. 1 zeigt ein Flussdiagramm eines Verfahrens 100 zur Reduktion von Temperaturspitzen während des Startens einer Brennstoffzelle mit einem Zwei-Phasen-Kühlsystem umfasst die folgenden Schritte: Zunächst wird der Sättigungsdruck eines Kühlmittels über ein Druckregelungsmodul 14 (nicht gezeigt) auf einen ersten Sättigungsdruck eingestellt 102. Dieser erste Sättigungsdruck wird so gewählt, dass die durch Siedeverzug induzierte Höchsttemperatur des Kühlmittels unterhalb der maximalen Betriebstemperatur der Brennstoffzelle liegt.

Nachdem der Sättigungsdruck eingestellt ist, wird die Brennstoffzelle gestartet 104. Während des Startvorgangs kann es zu einem Siedeverzug kommen, der zu einer erhöhten Temperatur des Kühlmittels führen kann. Nach Überschreitung der Temperaturspitze bei einem ersten Sättigungsdruck 102 wird der Sättigungsdruck des Kühlmittels über das Druckregelungsmodul 14 auf einen zweiten Sättigungsdruck eingestellt 106. Dieser zweite Sättigungsdruck ist höher als der erste Sättigungsdruck und ermöglicht eine effektive Kühlung der Brennstoffzelle nahe an ihrer maximalen Betriebstemperatur.

Durch das gezielte Einstellen des Sättigungsdrucks des Kühlmittels kann das Verfahren eine präzise Kontrolle der Temperaturen während des Startvorgangs gewährleisten und so die Betriebssicherheit und Lebensdauer der Brennstoffzelle verbessern.

Figur 2A und 2B zeigen jeweils ein System 10 zum Betreiben einer Brennstoffzelle 12 mit einem Zwei-Phasen-Kühlsystem, welches ausgelegt ist, eine effiziente Kühlung der Brennstoffzelle zu gewährleisten und Temperaturspitzen während des Startens zu reduzieren. Das System umfasst mehrere Komponenten, die in einem integrierten Kühlmittelkreislauf 16 mit einer Pumpe 20 arbeiten.

Die zentrale Komponente des Systems ist die Brennstoffzelle 12, die chemische Energie in elektrische Energie umwandelt. Um die optimale Betriebstemperatur der Brennstoffzelle 12 zu gewährleisten, wird ein Zwei-Phasen-Kühlsystem eingesetzt. Dieses System nutzt ein Kühlmittel, das sowohl in flüssiger als auch in gasförmiger Phase vorliegen kann, um die Wärme effizient abzuführen.

Um den Kühlmittelkreislauf zu steuern, ist ein Druckregelungsmodul 14 integriert. Dieses Modul ermöglicht die präzise Einstellung des Sättigungsdrucks des Kühlmittels im Kühlmittelkreislauf 16. Durch die Kontrolle des Sättigungsdrucks kann die Kühlleistung optimiert und die Temperaturspitzen in Form des Siedeverzugs während des Startvorgangs reduziert werden.

Das System 10 arbeitet in einem kontinuierlichen Kreislauf, bei dem das Kühlmittel die Brennstoffzelle 12 durchströmt und die entstehende Wärmeabsorbiert. Anschließend wird das Kühlmittel über den Wärmetauscher 18 gekühlt und erneut in den Kühlmittelkreislauf 16 zurückgeführt. Dadurch wird eine konstante Kühlung der Brennstoffzelle 12 gewährleistet und eine Überhitzung vermieden.

Der wesentliche Unterschied der Ausführungsformen von Figur 2A zu 2B kann darin gesehen werden, dass der Akkumulator/Sammler in Verbindung mit der Rückführungslinie ist und sich dadurch die Gasphase mit der Flüssigphase vermischen können. In dieser Ausführungsform wird ein Kondensator-Bypass eingesetzt, um die thermische Masse eines durch die Brennstoffzelle zirkulierenden Massestrom gering zu halten. Ein Kondensator-Bypass ist eine Vorrichtung oder eine Anordnung, die es ermöglicht, einen Teil des Massenstroms oder des Kühlmittels um den Kondensator herumzuleiten, anstatt sie durch den Kondensator zu führen. Der Kondensator-Bypass leitet das Kühlmittel somit am Kondensator vorbei. Dadurch verringert sich die thermische Masse des zirkulierenden Kühlmittels im Kreislauf und es findet keine unnötige Wärmeabgabe an die Umgebung während des Startprozesses statt.

Das System 10 zum Betreiben einer Brennstoffzelle mit einem Zwei-Phasen-Kühlsystem bietet eine effiziente Kühlung, verbesserte Leistung und eine längere Lebensdauer der Brennstoffzelle 12. Es ermöglicht einen zuverlässigen Betrieb auch bei extremen Temperaturen und sorgt für eine stabile und effektive Energieerzeugung.

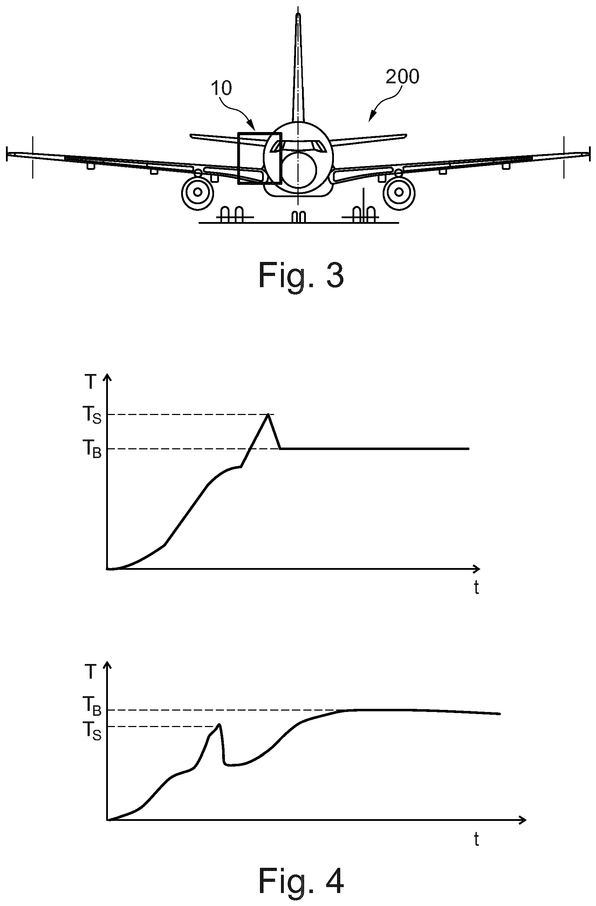

Figur 3 zeigt ein Luftfahrzeug 200 mit einem System 10 zum Betreiben einer Brennstoffzelle mit einem Zwei-Phasen-Kühlsystem ausgestattet. Das System 10 arbeitet gemäß den oben beschriebenen Prinzipien zur Reduktion von Temperaturspitzen während des Startens und zur effizienten Kühlung der Brennstoffzelle.

Das Luftfahrzeug 200 integriert das System 10 in seine Gesamtstruktur. Die Brennstoffzelle 12, das Druckregelungsmodul 14 und der Kühlmittelkreislauf 16 sind speziell auf die Anforderungen des Luftfahrzeugs angepasst.

Das System 10 ermöglicht es dem Luftfahrzeug 200, auf umweltfreundliche und effiziente Weise Energie zu erzeugen. Die Brennstoffzelle gewinnt dabei aus dem zugeführten Brennstoff und dem Luftsauerstoff elektrische Energie, während das Zwei-Phasen-Kühlsystem für eine optimale Betriebstemperatur sorgt, wobei der Siedeverzug im Bereich unterhalb der Betriebstemperatur stattfindet.

Figur 4 zeigt zwei Graphen, in denen die Temperatur einer Brennstoffzelle 12 über die Zeit aufgetragen ist. In dem oberen Graphen ist zu erkennen, dass die durch den Siedeverzug induzierte Höchsttemperatur Ts über der Betriebstemperatur T_{B} liegt. Hierdurch können die beschriebenen unerwünschten Effekte entstehen.

Der untere Graph stellt den Temperaturverlauf, dahingehend dar, dass in Reaktion darauf, dass die durch Siedeverzug induzierte Höchsttemperatur des Kühlmittels überschritten ist, der Sättigungsdrucks des Kühlmittels über das Druckregelungsmodul auf einen zweiten Sättigungsdruck eingestellt wird. Der zweite Sättigungsdruck ist dabei höher als der erste Sättigungsdruck.

Hierdurch fällt die durch Siedeverzug induzierte Höchsttemperatur Ts niedriger aus und liegt unterhalb der Betriebstemperatur T_{B}, wodurch das Betriebsverhalten der Brennstoffzelle verbessert wird.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: System
- 12: Brennstoffzelle
- 14: Druckregelungsmodul, Akkumulator
- 16: Kühlmittelkreislauf
- 18: Wärmetauscher
- 20: Pumpe
- 100: Verfahren zur Reduktion von Temperaturspitzen
- 102: Einstellen eines ersten Sättigungsdrucks
- 104: Starten der Brennstoffzelle
- 106: Einstellen eines zweiten Sättigungsdrucks
- 200: Luftfahrzeug
- T_{B}: Maximale Betriebstemperatur der Brennstoffzelle
- Ts: Höchsttemperatur durch Siedeverzug

## Patentansprüche

1. Verfahren (100) zur Reduktion von Temperaturspitzen während des Startens einer Brennstoffzelle (12) mit einem Zwei-Phasen-Kühlsystem, aufweisend die folgenden Schritte:
Einstellen (102) eines Sättigungsdrucks eines Kühlmittels, über ein Druckregelungsmodul (14), auf einen ersten Sättigungsdruck, derart, dass eine durch Siedeverzug induzierte Höchsttemperatur (Tₛ) eines Kühlmittels unterhalb einer maximalen Betriebstemperatur (T_{B}) der Brennstoffzelle liegt;
Starten (104) der Brennstoffzelle;
in Reaktion darauf, dass die durch Siedeverzug induzierte Höchsttemperatur (Tₛ) des Kühlmittels überschritten ist, Einstellen (106) des Sättigungsdrucks des Kühlmittels, über das Druckregelungsmodul (14), auf einen zweiten Sättigungsdruck, wobei der zweite Sättigungsdruck höher als der erste Sättigungsdruck ist.

2. Verfahren (100) gemäß Anspruch 1, wobei das Druckregelungsmodul (14) ein Akkumulator (14) ist.

3. Verfahren (100) gemäß Anspruch 2, wobei der Akkumulator (14) mit einem Auslass der Brennstoffzelle (12) verbunden und dazu eingerichtet ist, eine Dampf- und Flüssigphase des Kühlmittels voneinander zu trennen.

4. Verfahren (100) gemäß Anspruch 2 oder 3, wobei der Akkumulator (14) eingerichtet ist, eine Temperatur des Kühlmittels einzustellen.

5. Verfahren (100) gemäß Anspruch 2 bis 4, wobei der Akkumulator (14) eingerichtet ist, einen Druck des Kühlmittels einzustellen.

6. Verfahren (100) gemäß Anspruch 1, wobei das Druckregelungsmodul (14) eine Kombination aus einer Pumpe (20) und einem Drosselventil ist.

7. Verfahren (100) gemäß einem der vorhergehenden Ansprüche, wobei der erste Sättigungsdruck in einem Bereich von 0 bar bis 10 bar liegt, vorzugsweise 0 bar bis 5 bar, besonders bevorzugt 1,25 bar beträgt.

8. Verfahren (100) gemäß einem der vorhergehenden Ansprüche, wobei der zweite Sättigungsdruck in einem Bereich von 0 bar bis 10 bar liegt, vorzugsweise 0 bar bis 5 bar, besonders bevorzugt 3 bar beträgt.

9. Verfahren (100) gemäß einem der vorhergehenden Ansprüche, wobei die durch Siedeverzug induzierte Höchsttemperatur des Kühlmittels 50 % bis 100 % der Betriebstemperatur, vorzugsweise 60 % bis 90 %, besonders bevorzugt 70 % bis 80 % beträgt.

10. Verfahren (100) gemäß einem der vorhergehenden Ansprüche, wobei das Kühlmittel Methanol und/oder Ethanol umfasst.

11. System (10) zum Betreiben einer Brennstoffzelle mit einem Zwei-Phasen-Kühlsystem, wobei das System (10) zur Reduktion von Temperaturspitzen während des Startens eingerichtet ist, ein Verfahren gemäß einem der Ansprüche 1 bis 10 auszuführen, aufweisend:
mindestens eine Brennstoffzelle (12),
ein Druckregelungsmodul (14),
einen Wärmetauscher (18),
einen Kühlmittelkreislauf (16),
wobei der Kühlmittelkreislauf (16) eingerichtet ist, die Brennstoffzelle (12) durch Zwei-Phasen-Kühlung über den Wärmetauscher (18) zu kühlen,
wobei das Druckregelungsmodul (14) eingerichtet ist, einen Sättigungsdruck eines in dem Kühlmittelkreislauf (16) enthaltenen Kühlmittels einzustellen.

12. Luftfahrzeug (200) mit einem System (10) gemäß Anspruch 11.

## Claims

1. Method (100) for reducing temperature peaks during the start-up of a fuel cell (12) with a two-phase cooling system, comprising the following steps:
Adjusting (102) a saturation pressure of a coolant, via a pressure control module (14), to a first saturation pressure such that a maximum temperature (Tₛ ) of a coolant induced by boiling delay is below a maximum operating temperature (T_{B} ) of the fuel cell;
starting (104) the fuel cell;
in response to the maximum temperature (Tₛ ) of the coolant induced by boiling delay being exceeded, adjusting (106) the saturation pressure of the coolant via the pressure control module (14) to a second saturation pressure, wherein the second saturation pressure is higher than the first saturation pressure.

2. Method (100) according to claim 1, wherein the pressure control module (14) is an accumulator (14).

3. Method (100) according to claim 2, wherein the accumulator (14) is connected to an outlet of the fuel cell (12) and is arranged to separate a vapor phase and a liquid phase of the coolant from each other.

4. Method (100) according to claim 2 or 3, wherein the accumulator (14) is adapted to adjust a temperature of the coolant.

5. Method (100) according to claims 2 to 4, wherein the accumulator (14) is adapted to adjust a pressure of the coolant.

6. Method (100) according to claim 1, wherein the pressure control module (14) is a combination of a pump (20) and a throttle valve.

7. Method (100) according to one of the preceding claims, wherein the first saturation pressure is in a range from 0 bar to 10 bar, preferably 0 bar to 5 bar, and particularly preferably 1.25 bar.

8. Method (100) according to one of the preceding claims, wherein the second saturation pressure is in a range from 0 bar to 10 bar, preferably 0 bar to 5 bar, particularly preferably 3 bar.

9. Method (100) according to one of the preceding claims, wherein the maximum temperature of the coolant induced by boiling delay is 50% to 100% of the operating temperature, preferably 60% to 90%, particularly preferably 70% to 80%.

10. Method (100) according to one of the preceding claims, wherein the coolant comprises methanol and/or ethanol.

11. System (10) for operating a fuel cell with a two-phase cooling system, wherein the system (10) is designed to reduce temperature peaks during start-up by performing a method according to one of claims 1 to 10, comprising:
at least one fuel cell (12),
a pressure control module (14),
a heat exchanger (18),
a coolant circuit (16),
wherein the coolant circuit (16) is arranged to cool the fuel cell (12) by two-phase cooling via the heat exchanger (18),
wherein the pressure control module (14) is arranged to adjust a saturation pressure of a coolant contained in the coolant circuit (16).

12. Aircraft (200) with a system (10) according to claim 11.

## Revendications

1. Procédé (100) pour réduire les pics de température pendant le démarrage d'une pile à combustible (12) avec un système de refroidissement à deux phases, comprenant les étapes suivantes :
réglage (102) d'une pression de saturation d'un réfrigérant, via un module de régulation de pression (14), à une première pression de saturation, de telle sorte qu'une température maximale (Tₛ ) d'un réfrigérant induite par un retard d'ébullition soit inférieure à une température de fonctionnement maximale (T_{B} ) de la pile à combustible ;
démarrage (104) de la pile à combustible ;
en réponse au dépassement de la température maximale (Tₛ ) du réfrigérant induite par le retard d'ébullition, réglage (106) de la pression de saturation du réfrigérant, via le module de régulation de pression (14), à une deuxième pression de saturation, la deuxième pression de saturation étant supérieure à la première pression de saturation.

2. Procédé (100) selon la revendication 1, dans lequel le module de régulation de pression (14) est un accumulateur (14).

3. Procédé (100) selon la revendication 2, dans lequel l'accumulateur (14) est relié à une sortie de la pile à combustible (12) et est conçu pour séparer une phase vapeur et une phase liquide du réfrigérant.

4. Procédé (100) selon la revendication 2 ou 3, dans lequel l'accumulateur (14) est conçu pour régler la température du réfrigérant.

5. Procédé (100) selon les revendications 2 à 4, dans lequel l'accumulateur (14) est conçu pour régler une pression du réfrigérant.

6. Procédé (100) selon la revendication 1, dans lequel le module de régulation de pression (14) est une combinaison d'une pompe (20) et d'une soupape d'étranglement.

7. Procédé (100) selon l'une des revendications précédentes, dans lequel la première pression de saturation est comprise dans une plage de 0 bar à 10 bar, de préférence de 0 bar à 5 bar, et de manière particulièrement préférée de 1,25 bar.

8. Procédé (100) selon l'une des revendications précédentes, dans lequel la deuxième pression de saturation est comprise dans une plage de 0 bar à 10 bars, de préférence de 0 bar à 5 bars, et de manière particulièrement préférée de 3 bars.

9. Procédé (100) selon l'une des revendications précédentes, dans lequel la température maximale du réfrigérant induite par le retard d'ébullition est comprise entre 50 % et 100 % de la température de fonctionnement, de préférence entre 60 % et 90 %, et de manière particulièrement préférée entre 70 % et 80 %.

10. Procédé (100) selon l'une des revendications précédentes, dans lequel le réfrigérant comprend du méthanol et/ou de l'éthanol.

11. Système (10) pour faire fonctionner une pile à combustible avec un système de refroidissement à deux phases, le système (10) étant conçu pour réduire les pics de température pendant le démarrage, pour exécuter un procédé selon l'une des revendications 1 à 10, comprenant :
au moins une pile à combustible (12),
un module de régulation de pression (14),
un échangeur de chaleur (18),
un circuit de réfrigérant (16),
le circuit de réfrigérant (16) étant conçu pour refroidir la pile à combustible (12) par refroidissement à deux phases via l'échangeur de chaleur (18),
le module de régulation de pression (14) étant conçu pour régler une pression de saturation du réfrigérant contenu dans le circuit de réfrigérant (16).

12. Aéronef (200) équipé d'un système (10) selon la revendication 11.
